# EUROPEAN PATENT SPECIFICATION

(11) **EP 4 052 453 B1**
(45) Date of publication and mention of the grant of the patent: **01.07.2026**
(21) Application number: 20793286.4
(22) Date of filing: 12.10.2020
(51) Int. Cl.: H04L 61/5007, H04L 61/5061, H04W 76/19, H04W 76/11, H04W 76/12

(54) **METHOD AND APPARATUS FOR SESSION MANAGEMENT**
VERFAHREN UND VORRICHTUNG ZUR SITZUNGSVERWALTUNG
PROCÉDÉ ET APPAREIL DE GESTION DE SESSION

(30) Priority: 31.10.2019 WO PCT/CN2019/114739
(43) Date of publication of application: 07.09.2022
(73) Proprietor: TELEFONAKTIEBOLAGET LM ERICSSON (PUBL), 164 83 Stockholm (SE)
(72) Inventor: HE, Yingjiao, Shanghai, 200335 (CN); ZHU, Jinyin, Shanghai, 200335 (CN); YANG, Yong, 428 36 Kållered (SE); ZHANG, Wen, Shanghai, 200335 (CN)
(74) Representative: Ericsson
(86) International application number: PCT/EP2020/078575
(87) International publication number: WO 2021/083645

(56) References cited:
- US-B2- 9 867 225
- "3rd Generation Partnership Project; Technical Specification Group Core Network and Terminals; Interface between the Control Plane and the User Plane Nodes; Stage 3 (Release 16)", vol. CT WG4, no. V16.1.0, 18 September 2019 (2019-09-18), pages 1 - 243, XP051784581, Retrieved from the Internet <URL:ftp://ftp.3gpp.org/Specs/archive/29_series/29.244/29244-g10.zip 29244-g10.docx> [retrieved on 20190918]
- HUAWEI: "UE IP address pool based on IP version", vol. CT WG4, no. E-Meeting; 20200602 - 20200612, 22 May 2020 (2020-05-22), XP051887976, Retrieved from the Internet <URL:https://ftp.3gpp.org/tsg_ct/WG4_protocollars_ex-CN4/TSGCT4_98e_meeting/Docs/C4-203200.zip C4-203200 TEI16 29.244-UE IP address pool Id.docx> [retrieved on 20200522]
- ERICSSON: "UE IP address Pool Identity", vol. CT WG4, no. Reno, US; 20191111 - 20191115, 1 November 2019 (2019-11-01), XP051811708, Retrieved from the Internet <URL:https://ftp.3gpp.org/tsg_ct/WG4_protocollars_ex-CN4/TSGCT4_95_Reno/Docs/C4-195078.zip C4-195078_UE IP address pool ID PA2.docx> [retrieved on 20191101]
- "3rd Generation Partnership Project; Technical Specification Group Core Network and Terminals; 5G System; Restoration Procedures (Release 16)", vol. CT WG4, no. V16.1.0, 19 September 2019 (2019-09-19), pages 1 - 19, XP051784569, Retrieved from the Internet <URL:ftp://ftp.3gpp.org/Specs/archive/23_series/23.527/23527-g10.zip 23527-g10.docx> [retrieved on 20190919]
- ERICSSON: "Reestablishment of PFCP sessions after a UP function restart", vol. CT WG4, no. Reno, US; 20191111 - 20191115, 2 December 2019 (2019-12-02), XP051832022, Retrieved from the Internet <URL:https://ftp.3gpp.org/3guInternal/3GPP_Ultimate_CRPacks/CP-193045.zip 23527_CR0018r2_(Rel-16)_C4-195541was5498was5075_restoration flag 23.527.docx> [retrieved on 20191202]

## Description

### TECHNICAL FIELD

The non-limiting and exemplary embodiments of the present disclosure generally relate to the technical field of communications, and specifically to methods and apparatuses for session management.

### BACKGROUND

This section introduces aspects that may facilitate a better understanding of the disclosure. Accordingly, the statements of this section are to be read in this light and are not to be understood as admissions about what is in the prior art or what is not in the prior art.

An architecture of control and user plane separation (CUPS) of various network devices such as SGW (serving gateway), PGW (packet data network (PDN) gateway) and TDF (traffic detection function), etc. has been introduced in a communication network. For example, 3rd Generation Partnership Project (3GPP) TS23.214 V16.0.0 and TS29.244 V16.0.0 have defined various interfaces between the control plane nodes (or functions) and the user plane nodes (or functions). As described in 3GPP TS23.214 V16.0.0, an Sxb interface is defined between a PGW control plane (PGW-C) and a PGW user plane (PGW-U), an Sxa interface is defined between a SGW control plane (SGW-C) and a SGW user plane (SGW-U), and an Sxc interface is defined between a TDF control plane (TDF-C) and a TDF user plane (TDF-U). As described in 3GPP TS29.244 V16.0.0, an N4 interface is defined between a Session Management Function (SMF) and User Plane Function (UPF). Moreover, 3GPP TS23.214 V16.0.0 and TS29.244 V16.0.0 have defined various packet forwarding control protocol (PFCP) node related procedures and PFCP session related procedures between the control plane nodes (or functions) and the user plane nodes (or functions).

3GPP TS23.007 V15.4.0 has defined the handling of restoration of PFCP sessions for user plane node (such as SGW-U, PGW-U) failure in 4G (fourth generation) wireless communication network:
***16.14.4 SGW-U Failure***
   *The SGW-C will receive the recovery time stamps of the PFCP entity(ies) in the SGW-U in PFCP heartbeat request*/*response messages.*
   *Restoration of Sx sessions may start immediately after the Sx association setup procedure:*
      - *if the restoration is supported in the SGW-C on a proactive basis, the SGW-C may start re-establishing Sx sessions matching any PDRs.*
      - *if the restoration is supported in the SGW-C on a reactive basis:*
         - *the SGW-C shall establish an Sx session with a wildcarded PDR to instruct the UP function to forward G-PDU packets which are not matching any other PDRs to the CPfunction (to a F-TEID-uniquely assigned in the CP function for this Sx-u tunnel);*
         - *upon receipt of G-PDUs from this Sx-u tunnel, the CP function shall then check if it has an active session for each received G-PDU packet:*
            - *if so, the CP function shall perform Sx Session establishment procedures to re-establish the corresponding Sx sessions in the SGW-U;*
            - *otherwise the CPfunction shall generate a GTP-U Error Indication with a destination address set to the source IP address of the received G-PDU, and send it to the UP function. The UP function shall forward this GTP-U Error Indication transparently. The CP function shall delete the G-PDU after the check for active sessions.*
***17.1A.4 PGW-U Failure***
   *The PGW-C will receive the recovery time stamps of the PFCP entity(ies) in the PGW-U in and PFCP heartbeat requests*/*responses.*
   *The PGW-C may start restoring Sx sessions in the PGW-U and it may:*
      - *if re-establishment of Sx association is required, immediately re-establish the Sx association between the PGW-C and the PGW-U;*
      - *re-establish Sx sessions affected by the PGW-U failure.*
***17.1b.2 Restoration Procedures***
   *During or immediately after an PGW-U Restart, the PGW-U shall place local PGW-U Recovery Time Stamp value in all Heartbeat Request*/*Response and Sx Association Setup Request*/*Response Messages.*
   *Immediately after the re-establishment of an Sx association between the PGW-C and the PGW-U, the PGW-C may start restoring Sx sessions in the PGW-U.*
      *NOTE : Restoring Sx sessions in a PGW-U on a reactive basis (like defined for an SGW-U restart in clause 16.1A.4) is not supported in this release. In some cases, a restarted PGW-U cannot determine from the UE IP address the CPfunction reponsible for an incoming packet for which no session exists, e.g. when a UP function is controlled by multiple CPfunction for the same APN and when the UE IP address was assigned by the PDN.*

3GPP TS23.527 V16.1.0 has defined the handling of restoration of PFCP sessions for user plane node (such as UPF) failure in 5G (fifth generation) wireless communication network:
***4.3.2 Restoration Procedure for PSA UPF Restart***
   *Immediately after the re-establishment of a PFCP association between the SMF and the UPF, the SMF may start restoring PFCP sessions in the UPF.*
***4.3.4 Restoration Procedure for Intermediate UPF Restart***
   *The restoration of the PFCP sessions may start immediately after the PFCP association setup procedure:*
   - *if the restoration is supported in the SMF on a proactive basis, the SMF may start re-establishing PFCP sessions matching any PDRs.*
   - *if the restoration is supported in the SMF on a reactive basis:*
      - *the SMF shall establish an PFCP session with a wildcarded PDR to instruct the Intermediate UPF to forward G-PDU packets which are not matching any other PDRs to the SMF (to a F-TEID-uniquely assigned in the SMF for this PFCP-u tunnel);*
      - *upon receipt of G-PDUs from this PFCP-u tunnel, the SMF shall then check if it has an active session for each received G-PDU packet:*
         - *if so, the SMF shall perform the PFCP Session establishment procedures to re-establish the corresponding PFCP sessions in the Intermediate UPF;*
         - *otherwise the SMF shall generate a GTP-U Error Indication with a destination address set to the source IP address of the received G-PDU, and send it to the Intermediate UPF. The Intermediate UPF shall forward this GTP-U Error Indication transparently. The SMF shall delete the G-PDU after the check for active sessions.*

3GPP TS23.214 V16.0.0 and TS29.244 V16.0.0 have defined the same F-TEID (a fully qualified tunnel endpoint identifier of a general packet radio service tunneling Protocol user plane tunnel) allocation method used for a user plane node (such as UPF):
***3GPP TS29.244 V16.0.0:***
   ***5.5 F-TEID Allocation and Release***
   *The UP function shall set the FTUP feature flag in the UP Function Features IE if it supports F-TEID allocation in the UP function (see subclause 8.2.25). If so, the CP function shall determine whether F-TEIDs are allocated by the CPfunction or the UP function based on network configuration. The same F-TEID allocation option shall be used by all the CP functions controlling a particular UPfunction. The UP function shall reject a request to establish a new PDR with a different F-TEID allocation option than the option used for already created PDRs (by the same or a different CP function), with the cause "Invalid F-TEID allocation option".*
***3GPP TS23.214 V16.0.0***
***5.4 GTP-U IP address and TEIDu allocation***
***5.4.1 General***
   *Whether F-TEIDu allocation release is performed by CPfunction or UPfunction is determined by network configuration of the CP functions. When both F-TEIDu allocation in CP function and F-TEIDu allocation in UP function coexist in the same network, the same F-TEIDu allocation option shall be used by all the CP functions controlling a particular UP function.*
***3GPP TS29.244 V16.0.0***
   ***Table 7.5.2.2-2: PDI IE within PFCP Session Establishment Request***
   *The CPfunction shall set the CHOOSE (CH) bit to 1 if the UPfunction supports the allocation of F-TEID and the CP function requests the UP function to assign a local F-TEID to the PDR.*

3GPP TS23.501 V16.1.0 has defined UE (user equipment) IP (Internet Protocol) Address Pool ID (identifier) for DHCP (Dynamic Host Configuration Protocol))/DN-AAA (Data Network-authentication, authorization, and accounting) server to identify the range of IP address to be allocated, this IP range belongs to the selected UPF node. As described in clause 5.8.2.2 of 3GPP TS23.501 V16.1.0, the IP address allocation request sent to DHCP/DN-AAA server may include the IP address pool ID to identify which range of IP address is to be allocated. In this case the SMF is provisioned with separate IP address pool ID(s), and the mapping between IP address pool ID and UPF Id, DNN (Data Network Name), S-NSSAI (Single Network Slice Selection Assistance Information), IP version. The provision is done by OAM (Operations, administration and management) or during the N4 Association Setup procedure. A given IP address pool is controlled by a unique entity (either the SMF or the UPF or an external server). The IP address managed by the UPF can be partitioned into multiple IP address pool partition(s), i.e. associated with multiple IP address pool ID(s).

Patent document US9867225B2 discloses the use of a restoration flag in the restoration of MBMS sessions, in order to inform a RAN node whether the session to be established it is a new or a restored session.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

According to 3GPP TS23.007 V15.4.0 and TS23.527 V16.1.0, the PFCP Session Restoration procedure for UP failure in 4G and 5G wireless communication network may be as the following. The control plane (CP) may detect that the UP is restarted and restoration is required, and the CP may send PFCP Association Setup Request to the UP to re-establish PFCP association. For reactive restoration, the CP such as SGW-C/SMF may establish an PFCP session with a wildcarded PDR (Packet Detection Rule) to instruct the UP such as SGW-U/I-UPF (Intermediate UPF) function to forward G-PDU(GTP(general packet radio service (GPRS) tunnelling protocol) encapsulated user Plane Data Unit (PDU)))/T-PDU (Transport PDU) packets which are not matching any other PDRs to the CP such as the SGW-C/SMF function (to a F-TEID-uniquely assigned in the CP function for a Sx/N4-u tunnel). Note: for PGW-U/UPF-PSA (packet data unit session anchor), reactive restoration is not supported in current 3GPP standard. For reactive restoration, when the CP receives the GTP-U packets on the SX-u tunnel from the UP, the CP finds the corresponding stored PFCP sessions and FPCP information. For both proactive and reactive restoration methods, the CP sends PFCP Session Establishment Request to re-establish the PFCP session. For the F-TEID IE (information element) in PDI(Packet Detection Information) and Create Traffic Endpoint, the existing F-TEID value stored in control plane will be included and the CHOOSE (CH) bit is set to 0 since there is no need for UP allocating F-TEID-u. (Note: According to 3GPP TS29.244 V16.0.0: the CP function shall set the CHOOSE (CH) bit to 1 if the UP function supports the allocation of F-TEID and the CP function requests the UP function to assign a local F-TEID to the PDR). For the UE IP Address IE in PDI and Create Traffic Endpoint, the UE IP address is the stored IP address allocated for the PDN/PDU(protocol data unit) session and the CH bit is set 0 since there is no need for UP allocating IP address. (Note: According to TS29.2443GPP TS29.244 V16.0.0, the CP function shall set the CHOOSE (CH) bit to 1 if the UP function supports the allocation of UE IP address/prefix and the CP function requests the UP function to assign a UE IP address/prefix to the PDR). The UP shall use the received PFCP session information (F-TEID-u, PDR/FAR(Forwarding Action Rule)) to restore this PFCP session in the restarted UP. Meanwhile if a new Create Session Request received in CP, the CP shall send PFCP Session Establishment request with F-TEID/CH=1 to ask UP to allocate the F-TEID-u for this PFCP session since the UP allocated F-TEID-u method is used, and/or, with UE IP address/CH=1 to ask UP to allocate the IP address since UP allocated IP address is used.

However there may be some problems for PFCP Session Restoration Procedure for the failed UP (user plane).

Problem 1: there is a confliction between the restoration of PFCP session (working as CP allocating F-TEID-u) and a new establishment of PFCP session in UP (working as UP allocating F-TEID-u) regarding the F-TEID-u allocation. UP may reject either the request for restoration purpose or the request for the new session establishment. According to 3GPP TS23.214 V16.0.0 and TS29.244 V16.0.0, the same F-TEID allocation option shall be used by all the CP functions controlling a particular UP function. However, during a restoration procedure for a UPF restart, the CP function need to include the existing GTP-U F-TEID and/or UE IP Address for the PFCP session to be restored in the PFCP Session Establishment Request to restore the PFCP session. This may be a problem, since for new PFCP sessions due to new PDN/PDU session establishment, the UP function may allocate GTP-u F-TEID, while for the session to be restored, the UP function may accept the CP "allocated" GTP-u F-TEID. This problem may apply to all kinds of UP failure and applies for both reactive and proactive restoration.

Problem 2: there is a confliction between the restoration of PFCP session (working as CP allocating UE IP address) and a new establishment of PFCP session in UP (working as UP allocating UE IP address) regarding UE IP address allocation. UP may reject either the request for restoration purpose or the request for the new session establishment. This problem may apply to some UPs such as PGW-U and UPF anchor which allocated UE IP address during the PDN/PDU session establishment procedure.

Problem 3: the reactive restoration for PGW-U or UPF anchor failure is not supported in existing 3GPP specification. For example, a restarted PGW-U/UPF anchor cannot determine from the UE IP address the CP function reponsible for an incoming packet for which no session exists, e.g. when a UP function is controlled by multiple CP function for the same APN and when the UE IP address was assigned by the PDN.

Problem 4: when the method of UP allocating UE IP address is used, after UPF is selected, the UE IP address range(s) corresponding to this UPF is determined, but if the operator want to select one specific IP address range among the multiple IP pool ranges for the selected UPF based on the specific condition, e.g., location based UE IP address selection (which supported in non-CUPS) and/or RAT (radio access technology) type and/or roaming based UE IP address selection, it has a problem in CUPS, since CP knows the UE location and/or RAT type and/or roaming information, but the UP has no UE location and/or RAT type and/or roaming information.

To overcome or mitigate at least one of above mentioned problems or other problems, the embodiments of the present disclosure propose an improved solution of session management.

In an embodiment, when a CP sends a session establishment request such as PFCP session establishment request to a UP for restoration purpose, a new restoration indication may be included in the session establishment request so that the UP can get aware of this restoration.

In an embodiment, a new information element (IE) UE IP address Pool ID may be introduced in a session establishment request such as PFCP session establishment request. For example, the IE UE IP address pool ID may be included in the session establishment request such as PFCP session establishment request .

In an embodiment, for restoration purpose after a UP such as PGW-U or UPF anchor restart, when DHCP/DNN-AAA server is used for UE IP address assignment, the new UE IP address pool ID may be added in the PFCP Session Establishment Request message for Sx/N4-U tunnel establishment, this new UE IP address pool ID may require the UP to only forward the payload IP packet whose source IP address or destination IP address belongs to this UE IP address pool ID (i.e., the corresponding CP) on this Sx/N4-u tunnel. The UP such as PGW-U or UPF anchor also needs configure the detail IP address range associated with the UE IP address pool ID. The embodiment can enable the reactive restoration method supporting for PGW-U failure and UPF anchor failure.

In an embodiment, during the PDN/PDU session establishment procedure, for selecting one specific UE IP address range among the multiple UE IP pool ranges for the UP such as UPF, e.g., location based UE IP address selection (which supported in non-CUPS) and/or RAT type and/or roaming based UE IP address selection, the CP can firstly select UPF and select one IP address range among the multiple IP pool ranges according to UE location and/or RAT type and/or roaming information, and then send the corresponding UE IP address pool ID in the PFCP Session Establishment Request to the UP such as UPF. The UP such as UPF may assign the IP address from this UE IP address pool ID for a PDN connection.

Aspects of the invention are set out in the independent claims appended hereto. Optional features are set out in the dependent claims.

Embodiments herein afford many advantages, of which a non-exhaustive list of examples follows. Some embodiments herein may provide a clear logic for F-TEID u allocation for PFCP Session Restoration proactive and/or reactive mode for the failed user plane function such as UPF and may avoid the user plane function such as UPF rejecting the Session Establishment Request message such as PFCP Session Establishment Request message. Some embodiments herein may provide a clear logic for UE IP address allocation for PFCP Session Restoration proactive and/or reactive mode for the failed the user plane function such as UPF and may avoid the user plane function such as UPF rejecting the PFCP Session Establishment Request message. Some embodiments herein may solve at least one of the above described problems when the UE IP address is assigned by the external PDN. Some embodiments herein may enable the reactive restoration method supporting for PGW-U failure and UPF-A failure. Some embodiments herein may provide an efficient way for the UP forwarding the T-PDU payload traffic to the correct CP during the PFCP Session Restoration procedure. For UP allocating UE IP address method, some embodiments herein may provide a solution when the operator requires to assign a specific IP address range based on a condition, e.g., location based UE IP address selection, RAT type based UE IP address selection, roaming based UE IP address selection). The embodiments herein are not limited to the features and advantages mentioned above. A person skilled in the art will recognize additional features and advantages upon reading the following detailed description.

### BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG. 1 schematically shows a system according to an embodiment of the present disclosure;
FIG.2 schematically shows another system according to an embodiment of the present disclosure;
FIG. 3 shows a flowchart of a method according to an embodiment of the present disclosure;
FIG. 4 shows a flowchart of a method according to another embodiment of the present disclosure;
FIG. 5 shows a flowchart of a method according to another embodiment of the present disclosure;
FIG. 6 shows a flowchart of a method according to an unclaimed embodiment of the present disclosure;
FIG. 7 shows a flowchart of a method according to another embodiment of the present disclosure;
FIG. 8 shows a flowchart of a method according to another embodiment of the present disclosure;
FIG. 9 shows a flowchart of a method according to another embodiment of the present disclosure;
FIG. 10 shows a flowchart of a method according to another embodiment of the present disclosure;
FIG. 11 is a block diagram showing an apparatus suitable for use in practicing some embodiments of the disclosure;
FIG. 12 illustrates a simplified block diagram of a control plane function according to an embodiment of the present disclosure; and
FIG. 13 illustrates a simplified block diagram of a user plane function according to an embodiment of the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. Whilst the present invention is defined by the claims appended hereto, one skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "network" refers to a network following any suitable wireless communication standards such as new radio (NR), long term evolution (LTE), LTE-Advanced, wideband code division multiple access (WCDMA), high-speed packet access (HSPA), Code Division Multiple Access (CDMA), Time Division Multiple Address (TDMA), Frequency Division Multiple Access (FDMA), Orthogonal Frequency-Division Multiple Access (OFDMA), Single carrier frequency division multiple access (SC-FDMA) and other wireless networks. A CDMA network may implement a radio technology such as Universal Terrestrial Radio Access (UTRA), etc. UTRA includes WCDMA and other variants of CDMA. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDMA, Ad-hoc network, wireless sensor network, etc. In the following description, the terms "network" and "system" can be used interchangeably. Furthermore, the communications between two devices in the network may be performed according to any suitable communication protocols, including, but not limited to, the communication protocols as defined by a standard organization such as 3GPP. For example, the communication protocols as may comprise the first generation (1G), 2G, 3G, 4G, 4.5G, 5G communication protocols, and/or any other protocols either currently known or to be developed in the future.

The term "network device" or "network node" used herein refers to a network entity such as a core network device in a communication network. For example, in a wireless communication network such as a 3GPP-type cellular network, the network node may comprise a control plane function (e.g., SMF, PGW-C, TDF-C and SGW-C) and a user plane function (e.g., UPF, PGW-U, TDF-U and SGW-U), etc., which may offer numerous services to customers who are interconnected by an access network device. Each access network device is connectable to the core network device over a wired or wireless connection.

The term "network function (NF)" refers to any suitable function which can be implemented in a network node (physical or virtual) such as a core network node of a communication network. For example, the 5G system (5GS) may comprise a plurality of NFs such as AMF (Access and mobility Function), SMF (Session Management Function), AUSF (Authentication Service Function), UDM (Unified Data Management), PCF (Policy Control Function), AF (Application Function), NEF (Network Exposure Function), UPF (User plane Function) and NRF (NF Repository Function), RAN (radio access network), SCP (service communication proxy), etc. In other embodiments, the network function may comprise different types of NFs for example depending on a specific type of network.

The term "terminal device" refers to any end device that can access a communication network and receive services therefrom. By way of example and not limitation, the terminal device refers to a mobile terminal, user equipment (UE), or other suitable devices. The UE may be, for example, a Subscriber Station (SS), a Portable Subscriber Station, a Mobile Station (MS), or an Access Terminal (AT). The terminal device may include, but not limited to, a portable computer, an image capture terminal device such as a digital camera, a gaming terminal device, a music storage and a playback appliance, a mobile phone, a cellular phone, a smart phone, a voice over IP (VoIP) phone, a wireless local loop phone, a tablet, a wearable device, a personal digital assistant (PDA), a portable computer, a desktop computer, a wearable terminal device, a vehicle-mounted wireless terminal device, a wireless endpoint, a mobile station, a laptop-embedded equipment (LEE), a laptop-mounted equipment (LME), a USB dongle, a smart device, a wireless customer-premises equipment (CPE) and the like. In the following description, the terms "terminal device", "terminal", "user equipment" and "UE" may be used interchangeably. As one example, a terminal device may represent a UE configured for communication in accordance with one or more communication standards promulgated by the 3GPP, such as 3GPP' LTE standard or NR standard. As used herein, a "user equipment" or "UE" may not necessarily have a "user" in the sense of a human user who owns and/or operates the relevant device. In some embodiments, a terminal device may be configured to transmit and/or receive information without direct human interaction. For instance, a terminal device may be designed to transmit information to a network on a predetermined schedule, when triggered by an internal or external event, or in response to requests from the communication network. Instead, a UE may represent a device that is intended for sale to, or operation by, a human user but that may not initially be associated with a specific human user.

As yet another example, in an Internet of Things (IOT) scenario, a terminal device may represent a machine or other device that performs monitoring and/or measurements, and transmits the results of such monitoring and/or measurements to another terminal device and/or network equipment. The terminal device may in this case be a machine-to-machine (M2M) device, which may in a 3GPP context be referred to as a machine-type communication (MTC) device. As one particular example, the terminal device may be a UE implementing the 3GPP narrow band internet of things (NB-IoT) standard. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

It is noted that these terms as used in this document are used only for ease of description and differentiation among nodes, devices or networks etc. With the development of the technology, other terms with the similar/same meanings may also be used.

In the following description and claims, unless defined otherwise, all technical and scientific terms used herein have the same meaning as commonly understood by one of ordinary skills in the art to which this disclosure belongs.

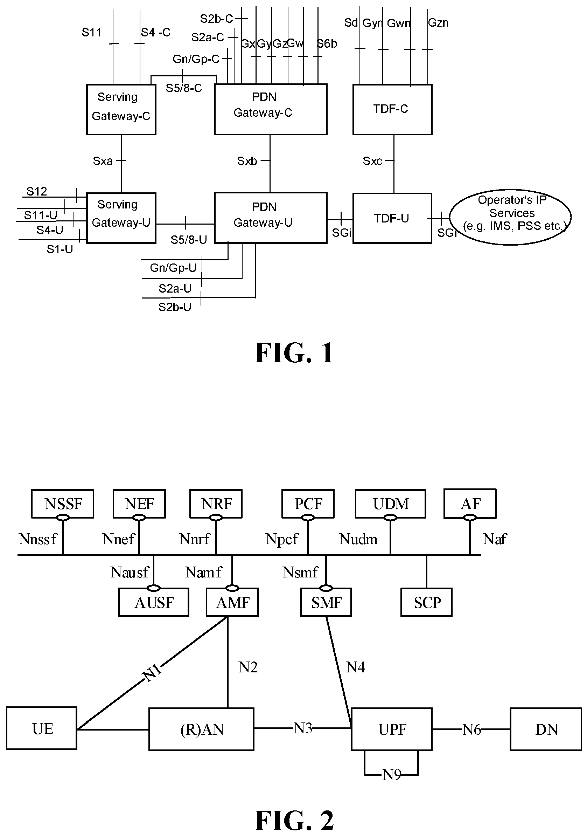

Although the subject matter described herein may be implemented in any appropriate type of system using any suitable components, the embodiments disclosed herein are described in relation to a communication system complied with the exemplary system architecture illustrated in FIG.1 and FIG.2. For simplicity, the system architectures of FIGs.1-2 only depict some exemplary elements. In practice, a communication system may further include any additional elements suitable to support communication between terminal devices or between a wireless device and another communication device, such as a landline telephone, a service provider, or any other network node or terminal device. The communication system may provide communication and various types of services to one or more terminal devices to facilitate the terminal devices' access to and/or use of the services provided by, or via, the communication system.

FIG.1 schematically shows a high level architecture of CUPS in the fourth generation network. The system architecture of FIG. 1 may be same as the Architecture reference model as described in clause 4.2 of 3GPP TS23.214 V16.0.0 and may comprise some exemplary network nodes such as serving gateway-C (SGW-C), serving gateway-U (SGW-U), PDN gateway-C (PGW-C), PDN gateway-U (PGW-U), TDF-C and TDF-U. As further illustrated in FIG. 1, the exemplary system architecture also contains the some interfaces such as Sxa. Sxb, Sxc, etc. Various network nodes shown in FIG.1 may be responsible for functions for example as defined in 3GPP TS23.214 V16.0.0. Each PGW-C may manage/control one or more PGW-Us though only one PGW-U is shown in the system. Each SGW-C may manage/control multiple SGW-Us though only one SGW-U is shown in the system. Each TDF-C may manage/control multiple TDF-Us though only one TDF-U is shown in the system.

FIG.2 schematically shows a high level architecture in the next generation network such as 5G. The system architecture of FIG.2 may comprise some exemplary elements such as AUSF, AMF, DN (data network), NEF, NRF, NSSF, PCF, SMF, UDM, UPF, AF, UE, (R)AN, SCP, etc.

In accordance with an exemplary embodiment, the UE can establish a signaling connection with the AMF over the reference point N1, as illustrated in FIG.2. This signaling connection may enable NAS (Non-access stratum) signaling exchange between the UE and the core network, comprising a signaling connection between the UE and the (R)AN and the N2 connection for this UE between the (R)AN and the AMF. The (R)AN can communicate with the UPF over the reference point N3. The UE can establish a protocol data unit (PDU) session to the DN (data network, e.g. an operator network or Internet) through the UPF over the reference point N6.

As further illustrated in FIG.2, the exemplary system architecture also contains the service-based interfaces such as Nnrf, Nnef, Nausf, Nudm, Npcf, Namf and Nsmf exhibited by NFs such as the NRF, the NEF, the AUSF, the UDM, the PCF, the AMF and the SMF. In addition, FIG.2 also shows some reference points such as N1, N2, N3, N4, N6 and N9, which can support the interactions between NF services in the NFs. For example, these reference points may be realized through corresponding NF service-based interfaces and by specifying some NF service consumers and providers as well as their interactions in order to perform a particular system procedure.

Various NFs shown in Fig.2 may be responsible for functions such as session management, mobility management, authentication, security, etc. The AUSF, AMF, DN, NEF, NRF, NSSF, PCF, SMF, UDM, UPF, AF, UE, (R)AN, SCP may include the functionality for example as defined in clause 6.2 of 3GPP TS23.501 V16.1.0.

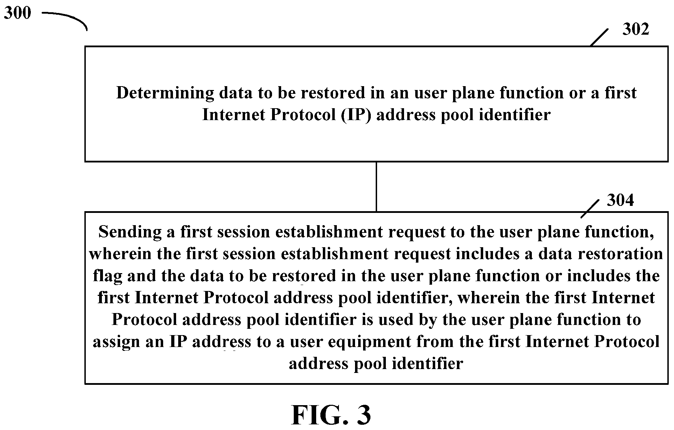

FIG. 3 shows a flowchart of a method according to an embodiment of the present disclosure, which may be performed by an apparatus implemented in/as or communicatively coupled to a control plane function. As such, the apparatus may provide means or modules for accomplishing various parts of the method 300 as well as means or modules for accomplishing other processes in conjunction with other components. The control plane function may be any suitable entity or node which can implement the control plane function. For example, the control plane function may be SGW-C, PGW-C, TDF-C, or SMF, etc.

At block 302, the control plane function determines data to be restored in an user plane function or a first IP address pool identifier. The user plane function may be a peer node of the control plane function. For example, when the control plane function is SGW-C, PGW-C, TDF-C, or SMF, the user plane function may be SGW-U, PGW- U, TDF- U, or UPF respectively. In an embodiment, the user plane function may be a restarted user plane function.

The control plane function determines the data to be restored in the user plane function. The data to be restored in the user plane function is suitable data which is required to be restored in the user plane function. The data comprises PFCP session information. The control plane function may be triggered to determine the data to be restored in the user plane function in various ways, for example, when the control plane function detects that the user plane function is restarted, when the control plane function determines that some data should be restored in the user plane function, when the control plane function receives a data restoration indication from the user plane function, etc. As an example, when the control plane function receives the recovery time stamps of the user plane function in heartbeat request/response messages from the user plane function, the control plane function knows that the user plane function is restarted, and then the control plane function can re-establish an association such as (Sx association) between the control plane function and the user plane function and start either proactive restoration or reactive restoration. For proactive restoration, the control plane function can send a session establishment request (such as PFCP Session Establishment Request) with the stored information to the user plane function. For example, the restoration of at least one session between the control plane function and the user plane function may start immediately after the association setup procedure between the control plane function and the user plane function.

In an embodiment, the data to be restored in the user plane function may include at least one of a fully qualified tunnel endpoint identifier of a general packet radio service tunneling Protocol user plane tunnel (F-TEID-u) information element and user equipment Internet Protocol address information element in PDI or F-TEID-u and user equipment Internet Protocol address information IE in Create Traffic Endpoint. The term " F-TEID-u", "PDI" and " Create Traffic Endpoint" may be similar to the corresponding terms as described in 3GPP TS29.244 V16.0.0.

In an embodiment, the control plane function may determine a first IP address pool identifier. The first IP address pool identifier may be used by the user plane function to assign an IP address to a user equipment from the first Internet Protocol address pool identifier. For example, when the control plane function receives a create session request, the control plane function may determine the first IP address pool identifier to identify which range of IP address is to be allocated. The control plane function may determine the first Internet Protocol address pool based on various factors such as location information of the user equipment, a type of radio access technology of the user equipment, or roaming information of the user equipment, etc.

At block 304, the control plane function sends a first session establishment request to the user plane function. The first session establishment request includes a data restoration flag and the data to be restored in the user plane function. The first session establishment request may include the first Internet Protocol address pool identifier. For example, when the control plane function determines the first IP address pool identifier at block 302, the control plane function sends the first session establishment request including the first Internet Protocol address pool identifier to the user plane function. When the control plane function determines the data to be restored in the user plane function at block 302, the control plane function sends the first session establishment request including the data restoration flag and the data to be restored in the user plane function to the user plane function.

In an embodiment, the data restoration flag may be set when the control plane function requests the user plane function to restore the data in the user plane function. For example, when the control plane function requests the user plane function to restore the data in the user plane function, the first session establishment request may include the data restoration flag and the data to be restored in the user plane function, otherwise the first session establishment request may not include the data restoration flag and the data to be restored in the user plane function.

In an embodiment, the data restoration flag may be included in an any suitable information element in the first session establishment request. As a first example, the data restoration flag may be included in an information element such as PFCPSEReq-Flags, which is included in the first session establishment request. The information element PFCPSEReq-Flags may include the data restoration flag such as RESTU. The CP function shall set this flag (i.e., RESTU) if the CP function requests the UP to restore the PFCP session when UP PFCP Session Restoration is required for a restarted UP.

In an embodiment, PFCPSEReq-Flags may be added in Table 7.5.2.1-1 of 3GPP TS29.244 V16.0.0:

**Table 7.5.2.1-1: Information Elements in an PFCP Session Establishment Request**

| **Information elements** | **P** | **Condition / Comment** | | **Appl.** | | | | **IE Type** |
|---|---|---|---|---|---|---|---|---|
| | | | | **Sxa** | **Sxb** | **Sxc** | **N4** | |
| PFCPSEReq-Flags | C | This IE shall be included if at least one of the flags is set to 1 . | | X | X | | X | |
| | | | - RESTU (Restoration Indication): this bit shall be set to "1" if the CP function re-establishes a PFCP session which was established before the UP function restart. (NOTE X) | | | | | PFCPSEReq-FI ags |

| | | | | | | | | |
|---|---|---|---|---|---|---|---|---|
| NOTE X: The UP function shall accept the CP function allocated GTP-U F-TEID and/or UE IP address in the PFCP Session Establishment Request message with the RESTU flag set to "1", when the UP function is requested to allocate GTP-U F-TEID and/or UE IP address for other PFCP sessions.. | | | | | | | | |

In an embodiment, PFCPSEReq-Flags may be added in Table 8.1.2-1 of 3GPP TS29.244 V16.0.0:

**Table 8.1.2-1: Information Element Types**

| **IE Type value (Decimal)** | **Information elements** | **Comment / Reference** | **Number of Fixed Octets** |
|---|---|---|---|
| aaa | PFCPSEReq-Flags | Extendable | |

| | | | |
|---|---|---|---|
| Where "aaa" may be any suitable value such as 182, etc. | | | |

In an embodiment, the PFCPSEReq-Flags IE indicates flags applicable to the PFCP Session Establishment Request message. It may be coded as depicted as following:

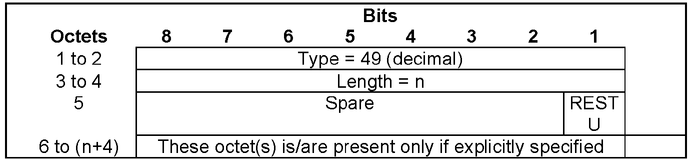

### PFCPSEReq-Flags

The following bits within Octet 5 shall indicate:
- Bit 1 - RESTU (Restoration Indication): if this bit is set to 1, it indicates to the UP function that the PFCP session to be established is to restore an existing PFCP session before the restart of the UP function, the UP function shall accept the GTP-U F-TEID and/or the UE IP Address which are provisioned by the CP function.
- Bit 2 to 8 - Spare, for future use, shall be set to 0 by the sender and discarded by the receiver.

In an embodiment, it may add a new indication such as PFCPSEReq-Flags in the PFCP Session Establishment Request message, to differentiate the new PFCP session establishment and restoration of an existing PFCP session. For example, the new indication may be added in the PFCP Session Establishment Request message when re-establishing an existing PFCP session in the UP function after restart, and when it is configured to use UP function allocation of GTP-U F-TEID and/or UE IP Address. The new indication in the PFCP Session Establishment Request message may indicate it is for the restoration of an existing PFCP session, not that the CP function determine to allocate F-TEID for this UP function, so that the UP function shall also accept the request to allocate F-TEID in a new PFCP session establishment.

In an embodiment, the following underline content may be added in cluase 16.1A.4 of 3GPP TS23.007 V15.4.0:
Restoration of Sx sessions includes:
- if re-establishment of Sx association is required, the SGW-C may start immediately the Sx association setup procedure, and then;

- when re-establishing a Sx session and if F-TEID allocation is performed in the SGW-U by network configuration, the SGW-C shall include a restoration indication in the PFCP Session Establishment Request message to indicate to the SGW-U it is for a restoration of an existing PFCP session and the SGW-U shall accept SGW-C allocated F-TEID.
- The SGW-U shall accept the request to allocate F-TEID in the subsequent PFCP session signaling.
   - if the restoration is supported in the SGW-C on a proactive basis, the SGW-C may start re-establishing Sx sessions matching any PDRs.
   - if the restoration is supported in the SGW-C on a reactive basis:
- the SGW-C shall establish an Sx session with a wildcarded PDR to instruct the UP function to forward G-PDU packets which are not matching any other PDRs to the CP function (to a F-TEID uniquely assigned in the CP function for this Sx-u tunnel);
- upon receipt of G-PDUs from this Sx-u tunnel, the CP function shall then check if it has an active session for each received G-PDU packet:
   - if so, the CP function shall perform Sx Session establishment procedures to re-establish the corresponding Sx sessions in the SGW-U;
   - otherwise the CP function shall generate a GTP-U Error Indication with a destination address set to the source IP address of the received G-PDU, and send it to the UP function. The UP function shall forward this GTP-U Error Indication transparently. The CP function shall delete the G-PDU after the check for active sessions.

In an embodiment, the following underline content may be added in cluase 17.1A.4 of 3GPP TS23.007 V15.4.0:
The PGW-C may start restoring Sx sessions in the PGW-U and it may:
- if re-establishment of Sx association is required, immediately re-establish the Sx association between the PGW-C and the PGW-U;
   - re-establish Sx sessions affected by the PGW-U failure.
- when re-establishing a Sx session and if F-TEID allocation is performed in the PGW-U by network configuration, the PGW-C shall include a restoration indication in the PFCP Session Establishment Request message to indicate to the PGW-U it is for a restoration of an existing PFCP session and the PGW-U shall accept SGW-C allocated F-TEID.
- The PGW-U shall accept the request to allocate F-TEID in the subsequent PFCP session signaling.

In an embodiment, the first session establishment request includes the data restoration flag and the data to be restored in the user plane function, the control plane function may be one of PGW-C, SGW-C, TDF-C, and SMF, and the user plane function may be one of PGW-U, SGW-U, TDF-U and UPF.

In an embodiment, the first session establishment request includes the first Internet Protocol address pool identifier, the control plane function may be one of PGW-C and SMF, and the user plane function may be one of PGW-U or PSA UPF.

In an embodiment, the control plane function may first determine the first IP address pool identifier (for example when receiving a create session request) and send the first session establishment request to the user plane function, wherein the first session establishment request includes the first Internet Protocol address pool identifier. Later the control plane function may determine the data to be restored in the user plane function (for example, when determining the user plane function is restarted) and send another first session establishment request to the user plane function, wherein said another first session establishment request includes the data restoration flag and the data to be restored in the user plane function.

In an embodiment, the control plane function may first determine the control plane function may determine data to be restored in the user plane function (for example when determining that the user plane function is restarted) and send a first session establishment request to the user plane function, wherein the first session establishment request includes the data restoration flag and the data to be restored in the user plane function. Later the control plane function may determine the first IP address pool identifier (for example when receiving a create session request) and send another first session establishment request to the user plane function, wherein said another first session establishment request includes the first Internet Protocol address pool identifier.

In an embodiment, the control plane function may only determine the data to be restored in the user plane function (for example when determining that the user plane function is restarted) and send another first session establishment request to the user plane function, wherein the first session establishment request includes the data restoration flag and the data to be restored in the user plane function.

In an unclaimed example of Fig 3, the control plane function may only determine the first Internet Protocol address pool identifier (for example when receiving a create session request) and send the first session establishment request to the user plane function, wherein the first session establishment request includes the first Internet Protocol address pool identifier.

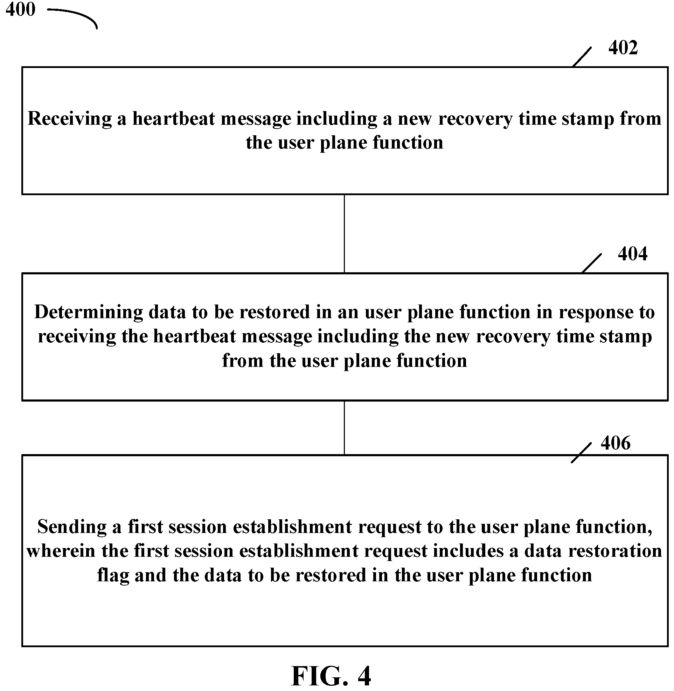

FIG. 4 shows a flowchart of a method according to another embodiment of the present disclosure, which may be performed by an apparatus implemented in/as or communicatively coupled to a control plane function. As such, the apparatus may provide means or modules for accomplishing various parts of the method 400 as well as means or modules for accomplishing other processes in conjunction with other components. The control plane function may be any suitable entity or node which can implement the control plane function. For example, the control plane function may be SGW-C, PGW-C, TDF-C, or SMF, etc. For some parts which have been described in the above embodiments, the description thereof is omitted here for brevity.

At block 402, the control plane function may receive a heartbeat message including a new recovery time stamp from the user plane function. This heartbeat message may contain the time stamp when the user plane function was started. The heartbeat message may be a heartbeat request or heartbeat response. In an embodiment, the heartbeat request and the heartbeat response may be similar to the corresponding Heartbeat Request or Heartbeat Response as described in clause 7.4.2 of 3GPP TS29.244 V16.0.0.

At block 404, the control plane function may determine data to be restored in the user plane function in response to receiving the heartbeat message including the new recovery time stamp from the user plane function.

At block 406, the control plane function sends a first session establishment request to the user plane function. The first session establishment request includes a data restoration flag and the data to be restored in the user plane function.

The method 400 may be referred to as a proactive restoration method. When the control plane function receives a heartbeat message including a new recovery time stamp from the user plane function, the control plane function knows the user plane function restarted, and can start either proactive restoration method or reactive restoration method. For proactive restoration method, the control plane function can send a session establishment request with the stored information to the user plane function.

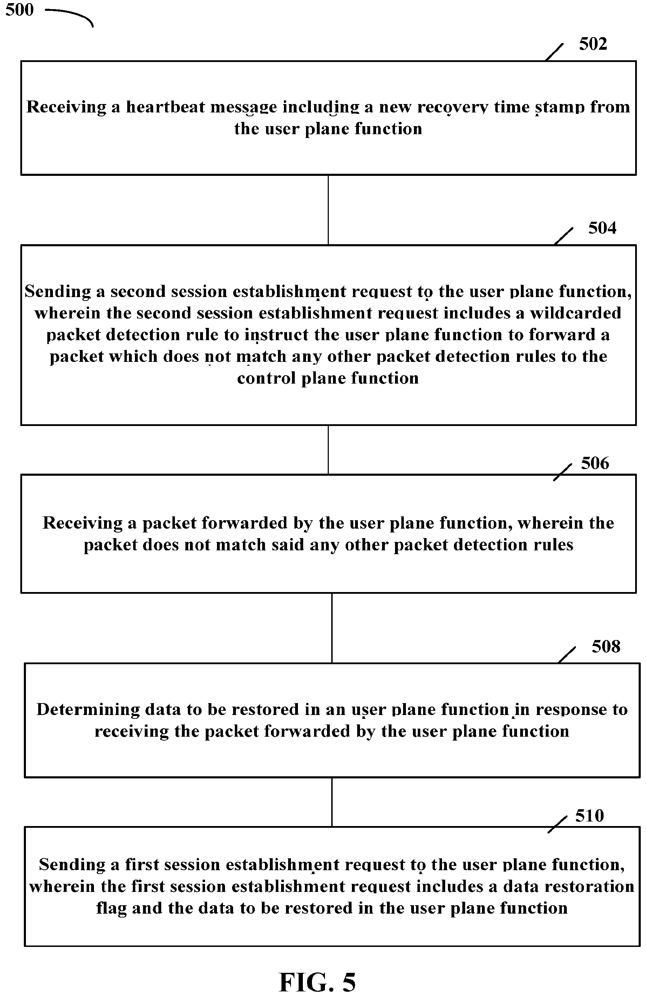

FIG. 5 shows a flowchart of a method according to another embodiment of the present disclosure, which may be performed by an apparatus implemented in/as or communicatively coupled to a control plane function. As such, the apparatus may provide means or modules for accomplishing various parts of the method 500 as well as means or modules for accomplishing other processes in conjunction with other components. The control plane function may be any suitable entity or node which can implement the control plane function. For example, the control plane function may be SGW-C, PGW-C, TDF-C, or SMF, etc. For some parts which have been described in the above embodiments, the description thereof is omitted here for brevity.

At block 502, the control plane function may receive a heartbeat message including a new recovery time stamp from the user plane function. Block 502 is similar to block 402 of FIG.4.

At block 504, the control plane function may send a second session establishment request to the user plane function. The second session establishment request may include a wildcarded packet detection rule to instruct the user plane function to forward a packet which does not match any other packet detection rules to the control plane function. In an embodiment, when the user plane function is PGW-U or PSA UPF, the second session establishment request may further include a second Internet Protocol address pool identifier which is used by the user plane function to only forward a packet whose either source IP address or destination IP address belonging to the second Internet Protocol address pool identifier. In an embodiment, the second session establishment request may be a PFCP session establishment request.

In an embodiment, a new IE UE IP Address Pool ID (i.e., the second Internet Protocol address pool identifier) may be introduced in Table 7.5.2.1-1 of 3GPP TS29.244 V16.0.0, the control plane function such as PGW-C or SMF may sends the PFCP Session Establishment request with this new IE to the user plane function such as PGW-U or PSA UPF. This embodiment can solve the problem 3 as described above.

**Table 7.5.2.1-1: Information Elements in an PFCP Session Establishment Request**

| **Information elements** | **P** | **Condition / Comment** | **Ap pl.** | | | | **IE Type** |
|---|---|---|---|---|---|---|---|
| | | | **Sx a** | **Sx b** | **Sx c** | **N4** | |
| UE IP Address Pool ID | O | This IE shall be set: | - | X | X | X | |
| | | - when there is PFCPSEReq-Flags/RESTU indicates this PFCP Session Establishment Request used for restoration, the CP function requests the UP only forwarding the payload IP packet which IP address belonging to this IP-Pool-ID. | | | | | UE IP Address Pool ID |
| | | - when there is **no** PFCPSEReq-Flags/RESTU indicates this PFCP Session Establishment Request used for restoration, the CP function requests that the UP assigns the UE IP address from this IP-Pool-ID, which is selected by CP based on conditions, e.g UE Location Information and/or RAT type and/or roaming information) | | | | | |

At block 506, the control plane function may receive a packet forwarded by the user plane function. The packet does not match said any other packet detection rules. In an embodiment, when the user plane function is PGW-U or PSA UPF, the source IP address or destination IP address of the packet belongs to the second Internet Protocol address pool identifier.

At block 508, the control plane function may determine data to be restored in an user plane function in response to receiving the packet forwarded by the user plane function. For example, the control plane function may find the corresponding stored PFCP sessions and PFCP information such as F-TEID u, UE IP address, PDR, FAR, URR (Usage Reporting Rule), etc.

At block 510, the control plane function sends a first session establishment request to the user plane function. The first session establishment request includes a data restoration flag and the data to be restored in the user plane function.

The method 500 may be referred to as a reactive restoration method. When the control plane function receives a heartbeat message including a new recovery time stamp from the user plane function, the control plane function knows the user plane function restarted, and can start either proactive restoration method or reactive restoration method. For reactive restoration method, the control plane function can send the second session establishment request to the user plane function, receive a packet forwarded by the user plane function, determine data to be restored in the user plane function in response to receiving the packet forwarded by the user plane function and send the first session establishment request to the user plane function, wherein the first session establishment request includes the data restoration flag and the data to be restored in the user plane function.

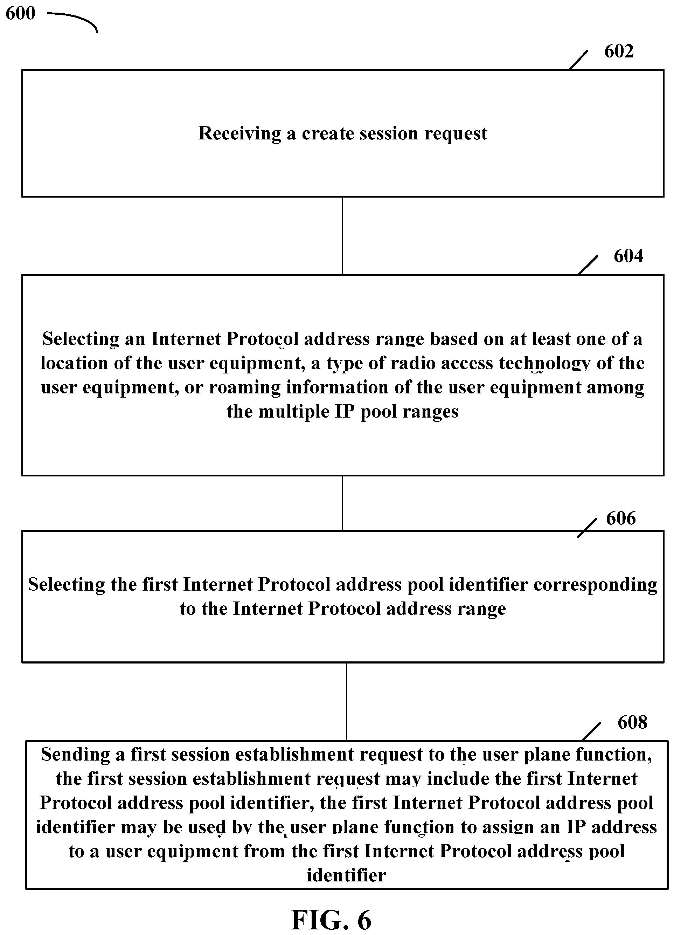

FIG. 6 shows a flowchart of a method according to an unclaimed embodiment of the present disclosure, which may be performed by an apparatus implemented in/as or communicatively coupled to a control plane function. As such, the apparatus may provide means or modules for accomplishing various parts of the method 600 as well as means or modules for accomplishing other processes in conjunction with other components. The control plane function may be any suitable entity or node which can implement the control plane function. For example, the control plane function may be PGW-C or SMF, etc. For some parts which have been described in the above embodiments, the description thereof is omitted here for brevity.

At block 602, the control plane function may receive a create session request. The create session request may be received from any suitable network node or function.

At block 604, the control plane function may select an Internet Protocol address range based on at least one of a location of the user equipment, a type of radio access technology of the user equipment, or roaming information of the user equipment among the multiple IP pool ranges.

At block 606, the control plane function may select the first Internet Protocol address pool identifier corresponding to the Internet Protocol address range.
At block 608, the control plane function may send a first session establishment request to the user plane function. The first session establishment request may include the first Internet Protocol address pool identifier. The first Internet Protocol address pool identifier may be used by the user plane function to assign an IP address to a user equipment from the first Internet Protocol address pool identifier.

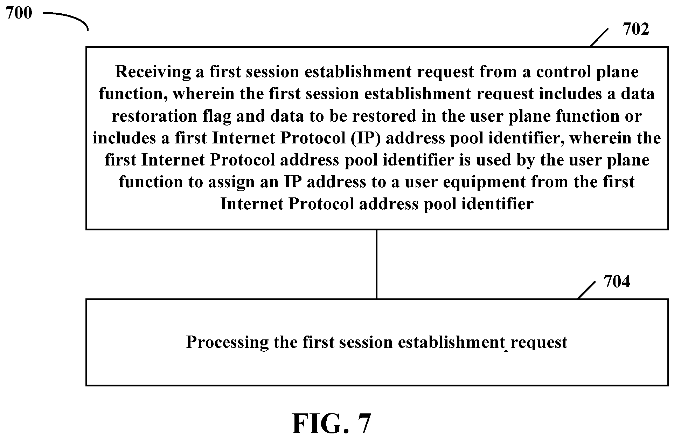

FIG. 7 shows a flowchart of a method according to an embodiment of the present disclosure, which may be performed by an apparatus implemented in/as or communicatively coupled to a user plane function. As such, the apparatus may provide means or modules for accomplishing various parts of the method 700 as well as means or modules for accomplishing other processes in conjunction with other components. The user plane function may be any suitable entity or node which can implement the user plane function. For example, the user plane function may be SGW-U, PGW-U, TDF-U, or UPF, etc. For some parts which have been described in the above embodiments, the description thereof is omitted here for brevity.

At block 702, the user plane function receives a first session establishment request from a control plane function. The first session establishment request includes a data restoration flag and data to be restored in the user plane function or includes a first Internet Protocol (IP) address pool identifier. The first Internet Protocol address pool identifier may be used by the user plane function to assign an IP address to a user equipment from the first Internet Protocol address pool identifier. For example, the control plane function may send the first session establishment request block 304 of FIG.3, and then the user plane function may receive the first session establishment request.

In an embodiment, the data restoration flag may be set when the control plane function requests the user plane function to restore the data in the user plane function.

In an embodiment, the data restoration flag may be included in an information element which is included in the first session establishment request.

The data to be restored in the user plane function comprises a packet forwarding control Protocol, PFCP, session information.

In an embodiment, the data to be restored in the user plane function may include at least one of F-TEID-u information element and user equipment Internet Protocol address information element in PDI or F-TEID-u information element and user equipment Internet Protocol address information element in Create Traffic Endpoint.

In an embodiment, the user plane function may be a restarted user plane function.

In an embodiment, the first Internet Protocol address pool identifier may be selected based on at least one of a location of the user equipment, a type of radio access technology of the user equipment, or roaming information of the user equipment.

The first session establishment request is a packet forwarding control Protocol (PFCP) session establishment request.

At block 704, the user plane function processes the first session establishment request. For example, when the first session establishment request includes a data restoration flag and the data to be restored in the user plane function, the user plane function may use the data to be restored in the user plane function such as the PFCP session information (F-TEID-u, UE IP address, PDR/FAR rule) to restore this PFCP session in the restarted user plane function and send a first session establishment response such as the PFCP Session Establishment Response to the control plane function. When the first session establishment request includes the first Internet Protocol (IP) address pool identifier, the user plane function may accept this Session Establishment Request and assign the IP address from the first Internet Protocol (IP) address pool identifier for the UE's PDN connection and send a first session establishment response such as the PFCP Session Establishment Response to the control plane function.

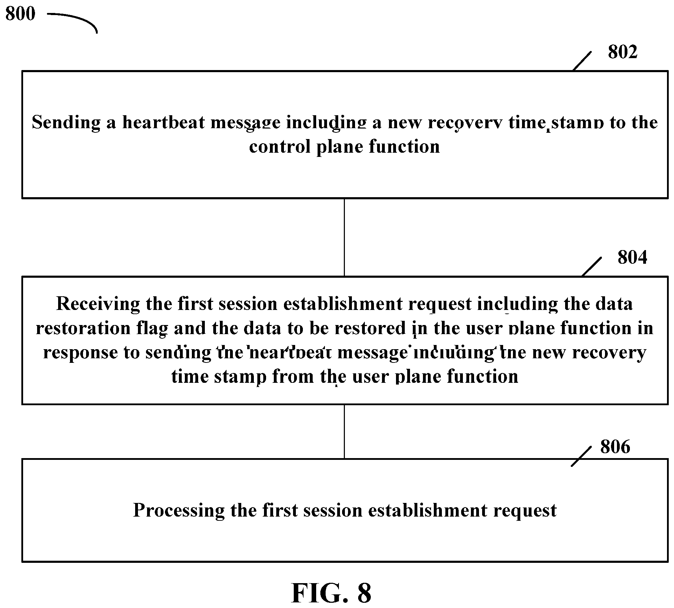

FIG. 8 shows a flowchart of a method according to an embodiment of the present disclosure, which may be performed by an apparatus implemented in/as or communicatively coupled to a user plane function. As such, the apparatus may provide means or modules for accomplishing various parts of the method 800 as well as means or modules for accomplishing other processes in conjunction with other components. The user plane function may be any suitable entity or node which can implement the user plane function. For example, the user plane function may be SGW-U, PGW-U, TDF-U, or UPF, etc. For some parts which have been described in the above embodiments, the description thereof is omitted here for brevity.

At block 802, the user plane function may send a heartbeat message including a new recovery time stamp to the control plane function. For example, when the user plane function is restarted, the user plane function may send the heartbeat message including the new recovery time stamp to the control plane function. The heartbeat message may be a heartbeat request message or a heartbeat response message.

At block 804, the user plane function may receive the first session establishment request including the data restoration flag and the data to be restored in the user plane function in response to sending the heartbeat message including the new recovery time stamp from the user plane function.

At block 806, the user plane function processes the first session establishment request.

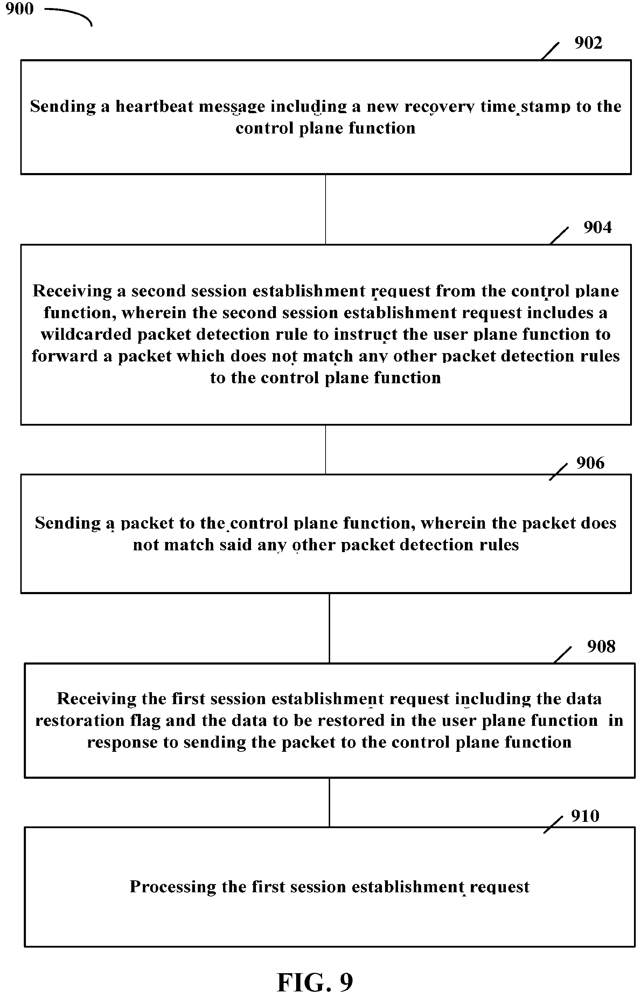

FIG. 9 shows a flowchart of a method according to an embodiment of the present disclosure, which may be performed by an apparatus implemented in/as or communicatively coupled to a user plane function. As such, the apparatus may provide means or modules for accomplishing various parts of the method 900 as well as means or modules for accomplishing other processes in conjunction with other components. The user plane function may be any suitable entity or node which can implement the user plane function. For example, the user plane function may be SGW-U, PGW-U, TDF-U, or UPF, etc. For some parts which have been described in the above embodiments, the description thereof is omitted here for brevity.

At block 902, the user plane function may send a heartbeat message including a new recovery time stamp to the control plane function. For example, when the user plane function is restarted, the user plane function may send the heartbeat message including the new recovery time stamp to the control plane function. The heartbeat message may be a heartbeat request message or a heartbeat response message.

At block 904, the user plane function may receive a second session establishment request from the control plane function. The second session establishment request may include a wildcarded packet detection rule to instruct the user plane function to forward a packet which does not match any other packet detection rules to the control plane function. In an embodiment, when the user plane function is PGW-U or PSA UPF, the second session establishment request may further include a second Internet Protocol address pool identifier which is used by the user plane function to only forward a packet whose either source IP address or destination IP address belonging to the second Internet Protocol address pool identifier. In an embodiment, the second session establishment request may be a PFCP session establishment request.

At block 906, the user plane function may send a packet to the control plane function. The packet does not match said any other packet detection rules. In an embodiment, when the user plane function is PGW-U or PSA UPF, the source IP address or destination IP address of the packet belongs to the second Internet Protocol address pool identifier.

At block 908, the user plane function may receive the first session establishment request including the data restoration flag and the data to be restored in the user plane function in response to sending the packet to the control plane function.

At block 910, the user plane function may process the first session establishment request.

According to various embodiments, the data restoration flag may be used to solve the problem 1 and problem 2 as described above. For example, the new IE PFCPSEReq-Flags may be introduced on a message level to indicate that this PFCP Session Establishment Request message is used for PFCP Session Restoration procedure on a reactive basis for the failed user plane function such as UPF. When the user plane function such as UPF receives a session establishment request such as PFCP Session Establishment Request with PFCPSEReq-Flags from the control plane function, the user plane function will treat this session establishment request using for session restoration procedure for the user plane function such as UPF. The user plane function such as UPF will store the information such as PFCP information received in session establishment request message, for example, the following IE which allocated by UP originally:
- F-TEID-u IE in Created PDR/PDI
- F-TEID-u IE in Created Traffic Endpoint
- UE IP address in Created PDR/PDI
- UE IP address in Created Traffic Endpoint

According to various embodiments, for data restoration in the user plane function, a new IE UE IP address pool ID may be introduced in the session establishment request such as PFCP Session Establishment Request to solve the problem 3 as described above. For example, the control plane function may send a session establishment request such as PFCP Session Establishment Request with the UE IP address pool ID to the user plane function.

According to various embodiments, for a create session request, a new IE UE IP address pool ID may be introduced in the session establishment request such as PFCP Session Establishment Request to solve the problem 4 as described above. For example, the control plane function may select a specific IP address range among the multiple IP pool ranges for a user plane function such as UPF, e.g., location based UE IP address selection (which supported in non-CUPS) and/or RAT type based UE IP address selection and/or roaming based UE IP address selection. The control plane function can select the user plane function such as UPF, select an IP address range according to UE location and/or RAT type and/or roaming information among the multiple IP pool ranges, send the corresponding UE IP address pool ID to the user plane function such as UPF, and require the user plane function such as UPF to assign the IP address from this UE IP address pool ID for a PDN connection.

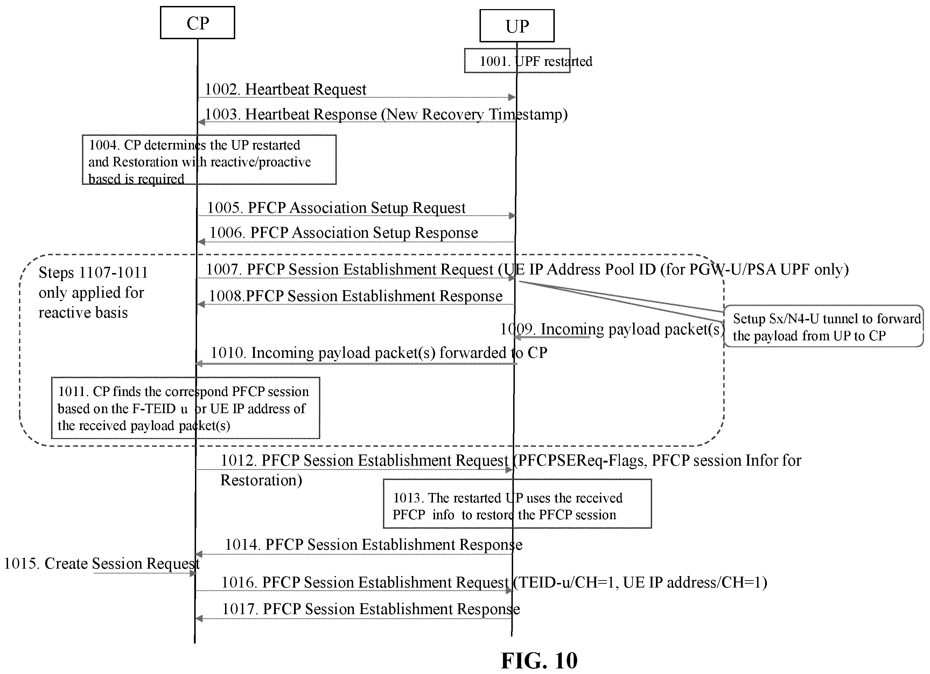

FIG. 10 shows a flowchart of a method according to an embodiment of the present disclosure.

At step 1001, UP is restarted.

At step 1002, CP sends a Heartbeat Request to UP.

At step 1003, CP receives a Heartbeat Response including a New Recovery Timestamp from UP.

At step 1004, CP determines that the UP is restarted and restoration with reactive or proactive based is required.

At step 1005, CP sends a PFCP Association Setup Request to UP to re-establish PFCP association.

At step 1006, CP receives a PFCP Association Setup Response from UP.

It is noted that steps 1007-1011 are applied for reactive restoration only.

At step 1007, CP sends a PFCP Session Establishment Request to UP. Step 1107 is used to setup Sx/N4-U tunnel to forward the payload from UP to CP. When UP is PGW-U or PSA UPF, the PFCP Session Establishment Request may include UE IP address pool ID. For example, the CP may establish an PFCP session with a wildcarded PDR to instruct the UP function to forward G-PDU/T-PDU packets which are not matching any other PDRs to the CP function (to a F-TEID uniquely assigned in the CP function for this Sx/N4-u tunnel). For PGW-U and PSA UPF, the CP also includes the second UE IP address pool ID in the PFCP Session Establishment Request to instruct the UP only forwarding the payload IP packet whose either source IP address or destination IP address belonging to the second UE IP address pool ID on this new Sx/N4-u tunnel.

At step 1008, CP receives a PFCP Session Establishment Response from UP.

At step 1009, UP receives incoming payload packet(s).

At step 1010, UP forwards the incoming payload packet(s) to CP. For example, UP determines that the incoming payload packet(s) are not matching any other PDRs. When the UP is PGW-U and PSA UPF, the UP also determines the source IP address or destination IP address of the incoming payload packet(s) belongs to the second UE IP address pool ID.

At step 1011, CP finds the correspond PFCP session based on the F-TEID-u or UE IP address of the received payload packet(s). For example, when the CP receives the G-PDU/T-PDU on the Sx/N4-u tunnel from the UP, the CP finds the corresponding stored PFCP sessions and PFCP information.

At step 1012, CP sends PFCP Session Establishment Request including PFCPSEReq-Flags and PFCP session Information for restoration to UP to re-establish the PFCP session.
- For the F-TEID IE in Create PDR/PDI, Create Traffic Endpoint, CH bit will **not** set to 1 since no need UP allocated F-TEID, and need UP use the F-TEID u in the request message.
- For the UE IP Address IE in Create PDR/PDI, Create Traffic Endpoint, CH bit will **not** set to 1 since no need UP allocated UE IP address, and need UP use the UE IP Address (stored in CP) in the request message.

At step 1013, the restarted UP uses the received PFCP information to restore the PFCP session. For example, UP uses the PFCP session information (F-TEID-u, UE IP address, PDR/FAR rule, etc.) to restore this PFCP session in the restarted UP.

At step 1014, UP sends the PFCP Session Establishment Response to the CP.

At step 1015, CP receives a Create Session Request.

At step 1016, CP sends PFCP Session Establishment Request including TEID-u/CH=1 and UE IP address/CH=1 to UP. For example, the CP will send PFCP Session Establishment request with CH=1 to ask UP to allocate the F-TEIDu for this PFCP session since the UP allocated F-TEIDu method/UE allocated IP address is decided according to the configuration at the beginning. The UPF will accept this PFCP Session Establishment Request, since the UPF knows the previous PFCP Session Establishment Request (i.e., step 1012) with CH not set 1 is for PFCP Session Restoration procedure.

At step 1017, UP sends a PFCP Session Establishment Response to CP.

Some messages as shown in FIG.10 are similar to the corresponding messages as described in 3GPP specifications such as 3GPP TS23.214 V16.0.0 and TS29.244 V16.0.0, etc., the description thereof is omitted here for brevity.

Embodiments herein afford many advantages, of which a non-exhaustive list of examples follows. Some embodiments herein may provide a clear logic for F-TEID u allocation for PFCP Session Restoration proactive and/or reactive mode for the failed user plane function such as UPF and may avoid the user plane function such as UPF rejecting the Session Establishment Request message such as PFCP Session Establishment Request message. Some embodiments herein may provide a clear logic for UE IP address allocation for PFCP Session Restoration proactive and/or reactive mode for the failed the user plane function such as UPF and may avoid the user plane function such as UPF rejecting the PFCP Session Establishment Request message. Some embodiments herein may solve at least one of the above described problems when the UE IP address is assigned by the external PDN. Some embodiments herein may enable the reactive restoration method supporting for PGW-U failure and UPF-A failure. Some embodiments herein may provide an efficient way for the UP forwarding the T-PDU payload traffic to the correct CP during the PFCP Session Restoration procedure. For UP allocating UE IP address method, some embodiments herein may provide a solution when the operator requires to assign a specific IP address range based on a condition, e.g., location based UE IP address selection, RAT type based UE IP address selection, roaming based UE IP address selection). The embodiments herein are not limited to the features and advantages mentioned above. A person skilled in the art will recognize additional features and advantages upon reading the following detailed description.

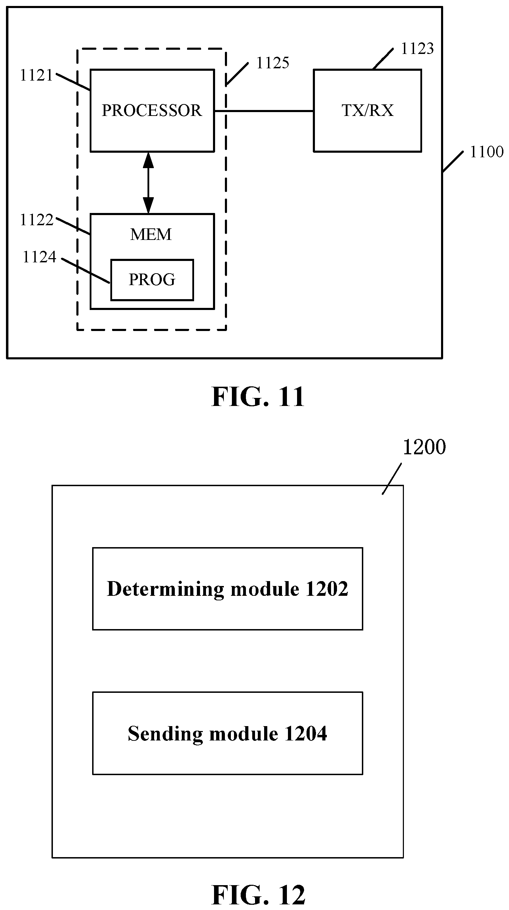

FIG. 11 is a block diagram showing an apparatus suitable for use in practicing some embodiments of the disclosure. For example, any one of the control plane function and the user plane function described above may be implemented through the apparatus 1100.

The apparatus 1100 comprises at least one processor 1121, such as a DP, and at least one MEM 1122 coupled to the processor 1121. The apparatus 1120 may further comprise a transmitter TX and receiver RX 1123 coupled to the processor 1121. The MEM 1122 stores a PROG 1124. The PROG 1124 may include instructions that, when executed on the associated processor 1121, enable the apparatus 1120 to operate in accordance with the embodiments of the present disclosure. A combination of the at least one processor 1121 and the at least one MEM 1122 may form processing means 1125 adapted to implement various embodiments of the present disclosure.

Various embodiments of the present disclosure may be implemented by computer program executable by one or more of the processor 1121, software, firmware, hardware or in a combination thereof.

The MEM 1122 may be of any type suitable to the local technical environment and may be implemented using any suitable data storage technology, such as semiconductor based memory devices, magnetic memory devices and systems, optical memory devices and systems, fixed memories and removable memories, as non-limiting examples.

The processor 1121 may be of any type suitable to the local technical environment, and may include one or more of general purpose computers, special purpose computers, microprocessors, digital signal processors DSPs and processors based on multicore processor architecture, as non-limiting examples.

In an embodiment where the apparatus is implemented as or at the control plane function, the memory 1122 contains instructions executable by the processor 1121, whereby the the control plane function operates according to any one of the methods 300, 400, 500 and 600 as described in reference to FIGs. 3-6.

In an embodiment where the apparatus is implemented as or at the user plane function, the memory 1122 contains instructions executable by the processor 1121, whereby the user plane function operates according to any one of the methods 700, 800, and 900 as described in reference to FIGs. 7-9.

FIG. 12 illustrates a simplified block diagram of a control plane function according to an embodiment of the present disclosure. The control plane function may be one of PGW-C, SGW-C, TDF-C, and SMF. The control plane function 1200 comprises a determining module 1202 configured to determine data to be restored in an user plane function or a first Internet Protocol (IP) address pool identifier. The control plane function 1200 further comprises a sending module 1204 configured to send a first session establishment request to the user plane function, wherein the first session establishment request includes a data restoration flag and the data to be restored in the user plane function or includes the first Internet Protocol address pool identifier. The first Internet Protocol address pool identifier may be used by the user plane function to assign an IP address to a user equipment from the first Internet Protocol address pool identifier.

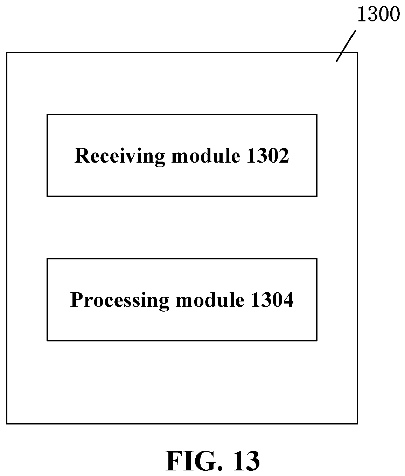

FIG. 13 illustrates a simplified block diagram of a user plane function according to an embodiment of the present disclosure. The user plane function may be one of PGW-U, SGW-U, TDF-U, and UPF. The user plane function 1300 comprises a receiving module 1302 configured to receive a first session establishment request from a control plane function. The first session establishment request may include a data restoration flag and data to be restored in the user plane function or includes a first Internet Protocol (IP) address pool identifier. The first Internet Protocol address pool identifier may be used by the user plane function to assign an IP address to a user equipment from the first Internet Protocol address pool identifier. The control plane function 1300 further comprises a processing module 1304 configured to processing the first session establishment request.

According to an aspect of the disclosure it is provided a computer program product being tangibly stored on a computer readable storage medium and including instructions which, when executed on at least one processor, cause the at least one processor to carry out the method related to the control plane function as described above.

According to an aspect of the disclosure it is provided a computer program product being tangibly stored on a computer readable storage medium and including instructions which, when executed on at least one processor, cause the at least one processor to carry out the method related to the user plane function as described above.

According to an aspect of the disclosure it is provided a computer-readable storage medium storing instructions which when executed by at least one processor, cause the at least one processor to perform the method related to the control plane function as described above.

According to an aspect of the disclosure it is provided a computer-readable storage medium storing instructions which when executed by at least one processor, cause the at least one processor to perform the method related to the user plane function as described above.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.
It will be obvious to a person skilled in the art that, as the technology advances, the inventive concept can be implemented in various ways. The above described embodiments are given for describing rather than limiting the disclosure, and it is to be understood that modifications and variations may be resorted to without departing from the scope of the disclosure as those skilled in the art readily understand. The protection scope of the disclosure is defined by the accompanying claims.

## Claims

1. A method (300) at a control plane function, comprising:
determining (302) data to be restored in a user plane function, wherein the data to be restored in the user plane function includes packet forwarding control protocol, PFCP, session information comprising a fully qualified tunnel endpoint identifier of a general packet radio service tunneling protocol user plane tunnel, F-TEID-u; and
sending (304) a first session establishment request to the user plane function, wherein the first session establishment request includes the data to be restored in the user plane function, wherein the first session establishment request is a PFCP session establishment request, **characterized in that** the first session establishment request further includes a data restoration flag, which indicates that the user plane function is to use the PFCP session information to restore a PFCP session in the user plane function.

2. The method according to claim 1, further comprising:
receiving (402) a heartbeat message including a new recovery time stamp from the user plane function, wherein determining data to be restored in a user plane function is in response to receiving the heartbeat message including the new recovery time stamp from the user plane function.

3. The method according to claim 2, further comprising
sending (504) a second session establishment request to the user plane function, wherein the second session establishment request includes a wildcarded packet detection rule to instruct the user plane function to forward a packet which does not match any other packet detection rules to the control plane function; and
receiving (506) a packet forwarded by the user plane function, wherein the packet does not match said any other packet detection rules,
wherein determining data to be restored in a user plane function is in response to receiving the packet forwarded by the user plane function.

4. The method according to claim 3, wherein the second session establishment request is a packet forwarding control Protocol, PFCP, session establishment request.

5. The method according to any of claims 1-4, wherein the user plane function is a restarted user plane function.

6. A method (700) at a user plane function, comprising:
receiving (702) a first session establishment request from a control plane function, wherein the first session establishment request includes data to be restored in the user plane function, wherein the data to be restored in the user plane function includes packet forwarding control protocol, PFCP, session information comprising a fully qualified tunnel endpoint identifier of a general packet radio service tunneling protocol user plane tunnel, F-TEID-u, the first session establishment request is a PFCP session establishment request, and
processing (704) the first session establishment request, **characterized in that** the first session establishment request further includes a data restoration flag, which indicates that the user plane function is to use the PFCP session information to restore a PFCP session in the user plane function.

7. The method according to claim 6, further comprising:
sending (802, 902) a heartbeat message including a new recovery time stamp to the control plane function, wherein receiving the first session establishment request including the data restoration flag and the data to be restored in the user plane function is in response to sending the heartbeat message including the new recovery time stamp from the user plane function.

8. The method according to claim 7, further comprising
receiving (904) a second session establishment request from the control plane function, wherein the second session establishment request includes a wildcarded packet detection rule to instruct the user plane function to forward a packet which does not match any other packet detection rules to the control plane function; and
sending (906) a packet to the control plane function, wherein the packet does not match said any other packet detection rules,
wherein receiving the first session establishment request including the data restoration flag and the data to be restored in the user plane function is in response to sending the packet to the control plane function.

9. The method according to any of claims 6-8, wherein the user plane function is a restarted user plane function.

10. An apparatus (1100) implemented in a control plane function, comprising:
a processor (1121); and
a memory (1122) coupled to the processor (1121), said memory (1122) containing instructions executable by said processor (1121), whereby said apparatus (1100) is operative to perform the method of any one of claims 1 to 5.

11. An apparatus (1100) implemented in a user plane function, comprising:
a processor (1121); and
a memory (1122) coupled to the processor (1121), said memory (1122) containing instructions executable by said processor (1121), whereby said apparatus (1100) is operative to perform the method of any one of claims 6-9.

## Patentansprüche

1. Verfahren (300) an einer Steuerebenenfunktion, umfassend:
Bestimmen (302) von Daten, die in einer Benutzerebenenfunktion wiedergestellt werden sollen, wobei die in der Benutzerebenenfunktion wiederherzustellenden Daten Sitzungsinformationen des Paketweiterleitungssteuerungsprotokolls, PFCP, umfassen, die eine vollständige Tunnelendpunktkennung eines Benutzerebenentunnels des Tunnelprotokolls des allgemeinen paketvermittelten Funkdiensts, F-TEID-u, umfassen; und
Senden (304) einer ersten Sitzungsaufbauanforderung an die Benutzerebenenfunktion, wobei die erste Sitzungsaufbauanforderung die in der Benutzerebenenfunktion wiederherzustellenden Daten umfasst, wobei die erste Sitzungsaufbauanforderung eine PFCP-Sitzungsaufbauanforderung ist,
**dadurch gekennzeichnet, dass** die erste Sitzungsaufbauanforderung ferner ein Datenwiederherstellungsflag umfasst, das anzeigt, dass die Benutzerebenenfunktion die PFCP-Sitzungsinformationen verwenden soll, um eine PFCP-Sitzung in der Benutzerebenenfunktion wiederherzustellen.

2. Verfahren nach Anspruch 1, ferner umfassend:
Empfangen (402) einer Heartbeat-Nachricht, die einen neuen Wiederherstellungszeitstempel umfasst, von der Benutzerebenenfunktion, wobei das Bestimmen von in einer Benutzerebenenfunktion wiederherzustellenden Daten in Reaktion auf das Empfangen der Heartbeat-Nachricht erfolgt, die den neuen Wiederherstellungszeitstempel von der Benutzerebenenfunktion umfasst.

3. Verfahren nach Anspruch 2, ferner umfassend:
Senden (504) einer zweiten Sitzungsaufbaunachricht an die Benutzerebenenfunktion, wobei die zweite Sitzungsaufbaunachricht eine mit Platzhalter versehene Paketerkennungsregel umfasst, um die Benutzerebenenfunktion anzuweisen, ein Paket, das keinen anderen Paketerkennungsregeln entspricht, an die Steuerebenenfunktion weiterzuleiten; und
Empfangen (506) eines von der Benutzerebenenfunktion weitergeleiteten Pakets, wobei das Paket keiner der anderen Paketerkennungsregeln entspricht,
wobei das Bestimmen von in einer Benutzerebenenfunktion wiederherzustellenden Daten in Reaktion auf das Empfangen des von der Benutzerebenenfunktion weitergeleiteten Pakets erfolgt.

4. Verfahren nach Anspruch 3, wobei es sich bei der zweiten Sitzungsaufbauanforderung um eine Sitzungsaufbauanforderung des Paketweiterleitungssteuerungsprotokolls, PFCP, handelt.

5. Verfahren nach einem der Ansprüche 1-4, wobei es sich bei der Benutzerebenenfunktion um eine neu gestartete Benutzerebenenfunktion handelt.

6. Verfahren (700) an einer Benutzerebenenfunktion, umfassend:
Empfangen (702) einer ersten Sitzungsaufbaunachricht von einer Steuerebenenfunktion, wobei die erste Sitzungsaufbauanforderung Daten umfasst, die in der Benutzerebenenfunktion wiedergestellt werden sollen, wobei die in der Benutzerebenenfunktion wiederherzustellenden Daten Sitzungsinformationen des Paketweiterleitungssteuerungsprotokolls, PFCP, umfassen, die eine vollständige Tunnelendpunktkennung eines Benutzerebenentunnels des Tunnelprotokolls des allgemeinen paketvermittelten Funkdiensts, F-TEID-u, umfassen, wobei die erste Sitzungsaufbauanforderung eine PFCP-Sitzungsaufbauanforderung ist, und
Verarbeiten (704) der ersten Sitzungsaufbauanforderungsnachricht, **dadurch gekennzeichnet, dass** die erste Sitzungsaufbauanforderung ferner ein Datenwiederherstellungsflag umfasst, das anzeigt, dass die Benutzerebenenfunktion die PFCP-Sitzungsinformationen verwenden soll, um eine PFCP-Sitzung in der Benutzerebenenfunktion wiederherzustellen.

7. Verfahren nach Anspruch 6, ferner umfassend:
Senden (802, 902) einer Heartbeat-Nachricht, die einen neuen Wiederherstellungszeitstempel umfasst, an die Steuerebenenfunktion, wobei das Empfangen der ersten Sitzungsaufbaunachricht, die das Datenwiederherstellungsflag und die in der Benutzerebenenfunktion wiederherzustellenden Daten umfasst, in Reaktion auf das Senden der Heartbeat-Nachricht erfolgt, die den neuen Wiederherstellungszeitstempel von der Benutzerebenenfunktion umfasst.

8. Verfahren nach Anspruch 7, ferner umfassend:
Empfangen (904) einer zweiten Sitzungsaufbaunachricht von der Steuerebenenfunktion, wobei die zweite Sitzungsaufbaunachricht eine mit Platzhalter versehene Paketerkennungsregel umfasst, um die Benutzerebenenfunktion anzuweisen, ein Paket, das keinen anderen Paketerkennungsregeln entspricht, an die Steuerebenenfunktion weiterzuleiten; und
Senden (906) eines Pakets an die Steuerebenenfunktion, wobei das Paket keiner der anderen Paketerkennungsregeln entspricht,
wobei das Empfangen der ersten Sitzungsaufbaunachricht, die das Datenwiederherstellungsflag und die in der Benutzerebenenfunktion wiederherzustellenden Daten umfasst, in Reaktion auf das Senden des Pakets an die Steuerebenenfunktion erfolgt.

9. Verfahren nach einem der Ansprüche 6-8, wobei es sich bei der Benutzerebenenfunktion um eine neu gestartete Benutzerebenenfunktion handelt.

10. Vorrichtung (1100), die in einer Steuerebenenfunktion implementiert ist und Folgendes umfasst:
einen Prozessor (1121); und
einen Speicher (1122), der mit dem Prozessor (1121) gekoppelt ist, wobei der Speicher (1122) Anweisungen enthält, die vom Prozessor (1121) ausgeführt werden können, wodurch die Vorrichtung (1100) zum Durchführen des Verfahrens nach einem der Ansprüche 1 bis 5 ausgelegt ist.

11. Vorrichtung (1100), die in einer Benutzerebenenfunktion implementiert ist und Folgendes umfasst:
einen Prozessor (1121); und
einen Speicher (1122), der mit dem Prozessor (1121) gekoppelt ist, wobei der Speicher (1122) Anweisungen enthält, die vom Prozessor (1121) ausgeführt werden können, wodurch die Vorrichtung (1100) zum Durchführen des Verfahrens nach einem der Ansprüche 6-9 ausgelegt ist.

## Revendications

1. Procédé (300) au niveau d'une fonction de plan de commande, comprenant :
la détermination (302) de données à restaurer dans une fonction de plan utilisateur, dans lequel les données à restaurer dans la fonction de plan utilisateur incluent des informations de session de protocole de commande de transfert de paquets, PFCP, comprenant un identifiant de point d'extrémité de tunnel entièrement qualifié d'un tunnel de plan utilisateur de protocole de tunneling de service général de radiocommunication par paquets, F-TEID-u ; et
l'envoi (304) d'une première demande d'établissement de session à la fonction de plan utilisateur, dans lequel la première demande d'établissement de session inclut les données à restaurer dans la fonction de plan utilisateur, dans lequel la première demande d'établissement de session est une demande d'établissement de session PFCP, **caractérisé en ce que** la première demande d'établissement de session inclut en outre un drapeau de restauration de données, qui indique que la fonction de plan utilisateur doit utiliser les informations de session PFCP pour restaurer une session PFCP dans la fonction de plan utilisateur.

2. Procédé selon la revendication 1, comprenant en outre :
la réception (402) d'un message de battement de cœur incluant un nouvel horodatage de récupération depuis la fonction de plan utilisateur, dans lequel la détermination de données à restaurer dans une fonction de plan utilisateur se déroule en réponse à la réception du message de battement de cœur incluant le nouvel horodatage de récupération depuis la fonction de plan utilisateur.

3. Procédé selon la revendication 2, comprenant en outre :
l'envoi (504) d'une deuxième demande d'établissement de session à la fonction de plan utilisateur, dans lequel la deuxième demande d'établissement de session inclut une règle de détection de paquets à caractère générique pour ordonner à la fonction de plan utilisateur de transférer un paquet qui ne correspond à aucune autre règle de détection de paquets à la fonction de plan de commande ; et
la réception (506) d'un paquet transféré par la fonction de plan utilisateur, dans lequel le paquet ne correspond à aucune autre règle de détection de paquets,
dans lequel la détermination de données à restaurer dans une fonction de plan utilisateur se déroule en réponse à la réception du paquet transféré par la fonction de plan utilisateur.

4. Procédé selon la revendication 3, dans lequel la deuxième demande d'établissement de session est une demande d'établissement de session de protocole de commande de transfert de paquets, PFCP.

5. Procédé selon l'une quelconque des revendications 1 à 4, dans lequel la fonction de plan utilisateur est une fonction de plan utilisateur redémarrée.

6. Procédé (700) au niveau d'une fonction de plan utilisateur, comprenant :
la réception (702) d'une première demande d'établissement de session depuis une fonction de plan de commande, dans lequel la première demande d'établissement de session inclut des données à restaurer dans la fonction de plan utilisateur, dans lequel les données à restaurer dans la fonction de plan utilisateur incluent des informations de session de protocole de commande de transfert de paquets, PFCP, comprenant un identifiant de point d'extrémité de tunnel entièrement qualifié d'un tunnel de plan utilisateur de protocole de tunneling de service général de radiocommunication par paquets, F-TEID-u, la première demande d'établissement de session est une demande d'établissement de session PFCP ; et
le traitement (704) de la première demande d'établissement de session, **caractérisé en ce que** la première demande d'établissement de session inclut en outre un drapeau de restauration de données, qui indique que la fonction de plan utilisateur doit utiliser les informations de session PFCP pour restaurer une session PFCP dans la fonction de plan utilisateur.

7. Procédé selon la revendication 6, comprenant en outre :
l'envoi (802, 902) d'un message de battement de cœur incluant un nouvel horodatage de récupération à la fonction de plan de commande, dans lequel la réception de la première demande d'établissement de session incluant le drapeau de restauration de données et les données à restaurer dans la fonction de plan utilisateur se déroule en réponse à l'envoi du message de battement de cœur incluant le nouvel horodatage de récupération depuis la fonction de plan utilisateur.

8. Procédé selon la revendication 7, comprenant en outre :
la réception (904) d'une deuxième demande d'établissement de session depuis la fonction de plan de commande, dans lequel la deuxième demande d'établissement de session inclut une règle de détection de paquets à caractère générique pour ordonner à la fonction de plan utilisateur de transférer un paquet qui ne correspond à aucune autre règle de détection de paquets à la fonction de plan de commande ; et
l'envoi (906) d'un paquet à la fonction de plan de commande, dans lequel le paquet ne correspond à aucune autre règle de détection de paquets,
dans lequel la réception de la première demande d'établissement de session incluant le drapeau de restauration de données et les données à restaurer dans la fonction de plan utilisateur se déroule en réponse à l'envoi du paquet à la fonction de plan de commande.

9. Procédé selon l'une quelconque des revendications 6 à 8, dans lequel la fonction de plan utilisateur est une fonction de plan utilisateur redémarrée.

10. Appareil (1100) mis en œuvre dans une fonction de plan de commande, comprenant :
un processeur (1121) ; et
une mémoire (1122) couplée au processeur (1121), ladite mémoire (1122) contenant des instructions exécutables par ledit processeur (1121), selon lesquelles ledit appareil (1100) est fonctionnel pour réaliser le procédé selon l'une quelconque des revendications 1 à 5.

11. Appareil (1100) mis en œuvre dans une fonction de plan utilisateur, comprenant :
un processeur (1121) ; et
une mémoire (1122) couplée au processeur (1121), ladite mémoire (1122) contenant des instructions exécutables par ledit processeur (1121), selon lesquelles ledit appareil (1100) est fonctionnel pour réaliser le procédé selon l'une quelconque des revendications 6 à 9.
